(19) Europäisches Patentamt
European Patent Office
Office européen des brevets

(11) EP 3 473 633 B1

(12) EUROPÄISCHE PATENTSCHRIFT

(45) Veröffentlichungstag und Bekanntmachung des Hinweises auf die Patenterteilung:
**13.11.2019 Patentblatt 2019/46**

(51) Int Cl.:
***C07F 7/18*** *(2006.01)*

(21) Anmeldenummer: **18150224.6**

(22) Anmeldetag: **03.01.2018**

# (54) EINE FARBLOSE, 3-(N-VINYLBENZYL-2-AMINOETHYL)AMINOPROPYLTRIMETHOXYSILANHYDROCHLORID UND METHANOL ENTHALTENDEN ZUSAMMENSETZUNG, EIN VERFAHREN ZU DEREN HERSTELLUNG UND DEREN VERWENDUNG

COLOURLESS 3- (N-VINYLBENZYL-2-AMINOETHYL) AMINOPROPYLTRIMETHOXYSILANE HYDROCHLORIDE AND METHANOL-CONTAINING COMPOSITION, A METHOD FOR THEIR PREPARATION AND THEIR USE

UN 3- (N-VINYLBENZYL-2-AMINOÉTHYL) CHLORHYDRATE D'AMINOPROPYLTRIMÉTHOXYSILANE INCOLORE ET COMPOSITION CONTENANT DE MÉTHANOL, SON PROCÉDÉ DE PRÉPARATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2017 EP 17197077**

(43) Veröffentlichungstag der Anmeldung:
**24.04.2019 Patentblatt 2019/17**

(73) Patentinhaber: **Evonik Degussa GmbH**
**45128 Essen (DE)**

(72) Erfinder:
- **Standke, Burkhard**
  **79540 Lörrach (DE)**
- **Waßmer, Christian**
  **79688 Hausen (DE)**
- **Bibbo, Kerstin**
  **79618 Rheinfelden (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**WO-A1-2005/118599 US-A- 4 902 556**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist eine farblose, 3-(N-vinylbenzyl-2-aminoethyl)-aminopropytrimethoxysilanhydrochlorid und Methanol enthaltenden Zusammensetzung (nachfolgend auch kurz erfindungsgemäße Lösung genannt), ein Verfahren zu deren Herstellung und deren Verwendung.

Es ist lange bekannt Hydrochloride funktionalisierter Aminosilane, z. B. von 3-(N-vinylbenzyl-2-aminoethyl)aminopropyltrimethoxysilan oder 3-(N-benzyl-2-aminoethyl)aminopropyltrimethoxysilan, herzustellen und beispielsweise als Haftvermittler zu verwenden (US 4,902,556, EP 353 766, US 4,849,294, EP 338 128, US 4,499,152, US 4,382,991, US 4,330,444, DE 28 02 242, JP 01-259369, EP 176 062, EP 590 270, WO 2005/118599, um nur einige zu nennen).

Für viele Applikationen werden jedoch zunehmend farblose Produkte gefordert. Bei der Umsetzung von Vinylbenzylchlorid (VBC) mit N-(2-Aminoethyl)-3-aminopropyltrimethoxysilan (DAMO) zur Herstellung eines 3-(N-Vinylbenzyl-2-aminoethyl)aminopropyltrimethoxysilanhydrochlorids erhält man in der technischen Praxis leider ein orange-/gelbliches bis intensiv orange-/gelbliches Produkt. Auch beobachtet man bei der Herstellung störende Ausfällungen, die durch zusätzlichen Aufwand vom Produkt zu trennen sind.

Es bestand daher das Problem, eine farblose Lösung bzw. Zusammensetzung, die mindestens 3-(N-vinylbenzyl-2-aminoethyl)aminopropyltrimethoxysilanhydrochlorid als Wirkstoff gelöst in Methanol enthält, und ein entsprechendes Verfahren das die Herstellung einer solchen farblosen Lösung gewährleisten kann, bereitzustellen. Auch bestand das Anliegen, Ausfällungen bei der Herstellung nach Möglichkeit zu vermeiden. Dabei soll unter einer solchen farblosen Lösung eine Zusammensetzung bzw. Lösung verstanden werden, die eine Gardner-Farbzahl < 2 (ISO 4630, 2015, spektrometrische Messung), insbesondere eine Farbzahl von ≤ 200 mg Pt-Co/l nach APHA/ISO 6271 (Teil 2 spektrometrische Messung) aufweist.

Die Aufgabe wird erfindungsgemäß entsprechend den Merkmalen in den Patentansprüchen gelöst.

So wurde in überraschender Weise gefunden, dass man als Umsetzungsprodukt der Verbindungen N-(2-Aminoethyl)-3-aminopropyltrimethoxysilan und Vinylbenzylchlorid eine praktisch farblose Lösung bzw. Zusammensetzung von u.a. 3-(N-Vinylbenzyl-2-aminoethyl)-aminopropyltrimethoxysilan-hydrochlorid in Methanol erhält, wenn man das eingesetzte Vinylbenzylchlorid unter Zusatz mindestens eines Stabilisators zunächst fraktioniert destilliert, die anschließende Umsetzung mit N-(2-Aminoethyl)-3-aminopropyltrimethoxysilan in Methanol durchführt und so das Produkt vorteilhaft direkt gewinnen kann.

Dabei wurde ferner gefunden, dass bei einer so durchgeführten Umsetzung vorteilhaft keine Ausfällungen oder Produkttrübungen auftreten. Optional kann man eine so erhaltene Lösung bzw. Zusammensetzung unter Zusatz von Methanol definiert verdünnen sowie zusätzlich definierte Mengen an N-(2-Aminoethyl)-3-aminopropyltrimethoxysilan zusetzten.

So kann man vorteilhaft eine Zusammensetzung bzw. Lösung bereitstellen, die eine Gardner-Farbzahl < 2 und insbesondere eine Farbzahl von ≤ 200 mg Pt-Co/l (nach APHA) aufweist.

Gegenstand der vorliegenden Erfindung ist ein Verfahren zur Herstellung einer farblosen, mindestens 3-(N-Vinylbenzyl-2-aminoethyl)aminopropyltrimethoxysilan-hydrochlorid und Methanol enthaltenden Lösung, wobei die Lösung eine APHA-Farbzahl von ≤ 200 mg Pt-Co/l aufweist,
indem man

- in Schritt 1 die Eduktkomponente Vinylbenylchlorid unter Zusatz mindestens eines Stabilisators fraktioniert destilliert und
- in Schritt 2 N-(2-Aminoethyl)-3-aminopropyltrimethoxysilan und Methanol vorlegt und unter Durchmischung das Destillat (Vinylbenzylchlorid) aus Schritt 1 in einem molaren Verhältnis des N-(2-Aminoethyl)-3-aminopropyltrimethoxysilans zu Vinylbenzylchlorid von 1,0 zu 0,60 bis 1,0 zu 1,15, vorzugsweise 1 zu 0,99 bis 1,01, bei einer Temperatur im Bereich von 40 bis 60°C zudosiert und nachreagieren lässt.

Vorteilhaft setzt man in Schritt 1 des erfindungsgemäßen Verfahrens mindestens einen Stabilisator aus der Reihe Nitromethan, 4-tert-Butyl-pyrocatechol und/oder 2,4-Dinitrophenol ein.

Beim erfindungsgemäßen Verfahren legt man in Schritt 2 N-(2-Aminoethyl)-3-aminopropyltrimethoxysilan und Methanol bevorzugt in einem Gewichtsverhältnis von 80 zu 20 bis 30 zu 70, vorzugsweise von 70 zu 30 bis 40 zu 60, insbesondere von 60 zu 40 bis 50 zu 50, vor.

Ferner setzt man beim erfindungsgemäßen Verfahren in Schritt 2 bevorzugt ein Vinylbenzylchlorid mit einer APHA-Farbzahl ≤ 5 mg Pt-Co/l ein, wie man es z.B. vorteilhaft in Schritt 1 gewonnen hat.

Geeigneterweise lässt man beim erfindungsgemäßen Verfahren das nach Umsetzung in Schritt 2 vorliegende Produktgemisch bei einer Temperatur im Bereich von 40 bis 60°C noch über eine Zeit von 30 Minuten bis 3 Stunden unter Durchmischung nachreagieren.

Darüber hinaus kann man die in bzw. gemäß Schritt 2 erhaltene Zusammensetzung unter Zusatz von Methanol verdünnt.

Ferner kann man vorteilhaft der in Schritt 2 erhaltenen Zusammensetzung zusätzlich eine definierte Menge an N-(2-Aminoethyl)-3-aminopropyltrimethoxysilan (DAMO) zugeben, geeigneterweise 0 bis 50 Gew.-%, vorzugsweise 1 bis 20 Gew.-%, insbesondere bis 5 Gew.-%, bezogen auf die Zusammensetzung.

So kann man vorteilhaft die im Anschluss an Schritt 2 vorliegende Zusammensetzung unter Zusatz von Methanol auf einen Gehalt an Wirkstoff [Wirkstoff, d.h. mindestens zwei Verbindungen aus der Reihe der unten angeführten Formeln I bis VI] von 20 bis 80 Gew.-%, vorzugsweise 30 bis 70 Gew.-%, besonders vorzugsweise 35 bis 60 Gew.-%, insbesondere von 40 bis 50 Gew.-%, bezogen auf die Zusammensetzung, einstellen.

3-(N-Vinylbenzyl-2-aminoethyl)aminopropyltrimethoxysilanhydrochlorid kann beispielsweise durch die nachfolgende Formel veranschaulicht werden, dabei kann die Vinyl-Gruppe in ortho-, meta- und para-Stellung des aromatischen 6-Rings angeordnet sein, vorzugsweise in para-Stellung, und y für 0, 1 oder 2 stehen:

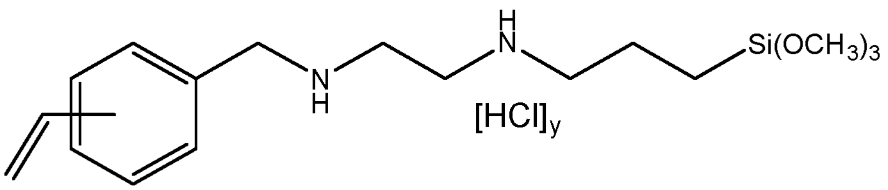

Eine nach dem erfindungsgemäßen Verfahren hergestellte bzw. erhaltene Zusammensetzung kann vorteilhaft zusätzlich einen Anteil an N-(2-Aminoethyl)-3-aminopropyltrimethoxysilan bzw. N-(2-Aminoethyl)-3-aminopropyltrimethoxysilan-hydrochlorid enthalten, vgl. nachfolgende Formel I, wobei y für 0, 1 oder 2 stehen kann:

$(H_3CO)_3Si-(CH_2)_3NH(CH_2)_2NH_2 \text{ x } (HCl)_y$ Formel I

Darüber hinaus können bei der erfindungsgemäßen Verfahren neben dem 3-(N-Vinylbenzyl-2-aminoethyl)aminopropyltrimethoxysilan, vgl. auch nachfolgende Formel II

$(H_3CO)_3Si-(CH_2)_3NH(CH_2)_2NH \text{ x } (HCl)_y$ Formel II

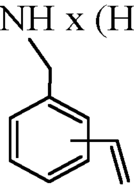

,

die folgenden Substitutionsprodukte entstehen, wobei auch hier y für 0, 1 oder 2 stehen kann:

$(H_3CO)_3Si-(CH_2)_3NH(CH_2)_2NH \text{ x } (HCl)_y$ Formel II

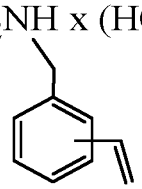

,

$(H_3CO)_3Si-(CH_2)_3N(CH_2)_2NH_2 \text{ x } (HCl)_y$ Formel III

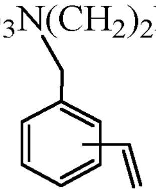

,

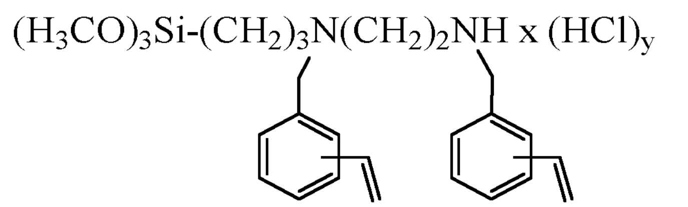

Formel IV

,

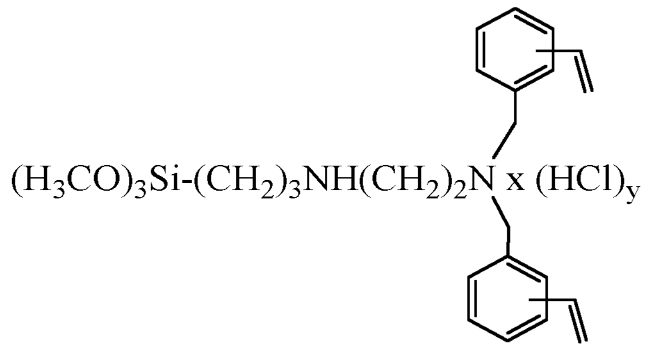

Formel V

und

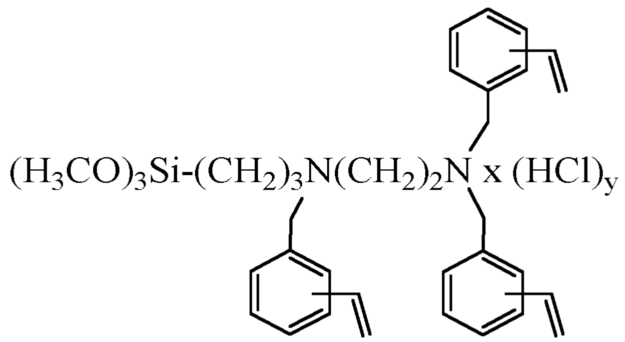

Formel VI

.

Im Allgemeinen kann man das erfindungsgemäße Verfahren wie folgt durchführen:
Für die Durchführung von Schritt 1 des vorliegenden Verfahrens, um die Eduktkomponente VBC in geeigneter Form zu gewinnen, verwendet man eine Destillations- bzw. Rektifikationseinheit, die beispielsweise -aber nicht ausschließlich- einen heiz-/kühlbaren Kessel mit Rührvorrichtung und Temperaturüberwachung/-regelung, aufgesetzter Trennkolonne, optional mit Packung, Rücklaufteiler und Vorlagebehälter, Öldrehschieberpumpe sowie Druckmess-/Druckregeleinheit inkl. Kühlfalle umfasst. Vorteilhaft setzt man in Schritt 1 dem VBC mindestens einen Stabilisator aus der Reihe Nitromethan, 4-tert-butylpyrocatechol und/oder 2,4-Dinitrophenol zu. Vorlauf und Destillationsrückstand der fraktionierten Destillation werden in der Regel verworfen.

Beim vorliegenden Verfahren führt man die Umsetzung gemäß Schritt 2 geeigneterweise -aber nicht ausschließlich- in einem beheiz-/kühlbaren, d.h. temparaturgeregelten Rührkessel mit Rückflüßkühler und geeigneter Dosiereinheit für die Eduktkomponenten aus. So legt man in Schritt 2 gemäß vorliegendem Verfahren geeigneterweise N-(2-Aminoethyl)-3-aminopropyltrimethoxysilan (DAMO) und Methanol vor und dosiert unter Durchmischung das Destillat (Vinylbenzylchlorid = VBC) aus Schritt 1 in einem molaren Verhältnis des N-(2-Aminoethyl)-3-aminopropyltrimethoxysilans zu Vinylbenzylchlorid beispielsweise -aber nicht ausschließlichvon 1,0 zu 0,60 bis 1,0 zu 1,15, insbesondere von 1 zu 1, bei einer Temperatur im Bereich von 40 bis 60°C in das vorliegende Gemisch aus N-(2-Aminoethyl)-3-aminopropyltrimethoxysilan und Methanol und lässt geeigneterweise noch einige Zeit unter Durchmischung und Temperaturkontrolle nachreagieren. Bei der Umsetzung gemäß Schritt 2 des vorliegenden Verfahrens treten vorteilhaft keine Ausfällungen bzw. Trübungen mehr auf, so dass man auf zusätzliche Aufarbeitungsmaßnahmen vorteilhaft verzichten kann. Man kann so direkt ein klares, praktisch farbloses Produkt mit einer APHA-Farbzahl von ≤ 200 mg Pt-Co/l erhalten, das man darüber hinaus gezielt durch Zusatz von Methanol sowie optional von DAMO beispielsweise auf einen Gehalt an so genanntem Wirkstoff in der erfindungsgemäßen farblosen Zusammensetzung von 20 bis 80 Gew.-%, bezogen auf die gesamte Zusammensetzung, einstellen kann; d.h. hier wird unter dem Begriff Wirkstoff ein Gemisch aus mindestens zwei Verbindungen aus der Reihe der oben angeführten Formeln I bis VI verstanden.

Darüber hinaus kann man die erfindungsgemäß erhaltene Zusammensetzung zusätzlich auf einen definierten pH-Wert einstellen, beispielsweise - aber nicht ausschließlich- durch Zusatz von Essigsäure, d.h. insbesondere konzentrierter Essigsäure. So kann man eine erfindungsgemäße Zusammensetzung vorteilhaft auf einen pH-Wert von 5 bis 6 einstellen. Dazu kann man den pH-Wert mittels einer Glaselektrode (Fa. Methrom) bestimmen.

Gegenstand der vorliegenden Erfindung ist daher eine Zusammensetzung, die nach dem erfindungsgemäßen Verfahren erhältlich ist bzw. erhalten wird.

Gegenstand der vorliegenden Erfindung ist somit auch eine farblose Zusammensetzung umfassend mindestens zwei Verbindungen aus der Reihe gemäß der Formeln I bis VI und Methanol, wobei die Zusammensetzung bzw. Lösung einen Gehalt an Wirkstoff von 20 bis 80 Gew.-%, bezogen auf die gesamte Zusammensetzung, und eine APHA-Farbzahl von ≤ 200 mg Pt-Co/l aufweist.

Bevorzugt enthält eine erfindungsgemäße Zusammensetzung
an Methanol von 20 bis 70 Gew.-%, vorzugsweise 40 bis 60 Gew.-%,
DAMO von 0 bis 60, vorzugsweise 0,01 bis 30 Gew.-%,
Verbindung gemäß Formel II[1)] von 12 bis 18 Gew.-%,
Verbindung gemäß Formel III[1)] von 11 bis 15 Gew.-%,
Verbindungen gemäß den Formeln IV[1)] und VI[1)] in Summe von 27 bis 38 Gew.-%, sowie
Verbindung gemäß Formel V[1)] von 3 bis 6 Gew.-%,
jeweils bezogen auf die gesamte Zusammensetzung und wobei alle Komponenten der Zusammensetzung in Summe 100 Gew.-% ergeben [[1)]: der HCl-Anteil in der besagten Verbindung gemäß den jeweiligen Formeln ist hier nicht zu berücksichtigen].

Die erfindungsgemäße Zusammensetzung bzw. erfindungsgemäß erhaltene Produkte bzw. Lösungen eignen sich vorteilhaft als Haftvermittler zwischen anorganischen und organischen Oberflächen, insbesondere bei der Verstärkung organischer Polymere mit anorganischen, vorzugsweise oxidischen, Füllstoffen, Glasfasern oder metallischen Partikeln sowie bei der Beschichtung anorganischer Oberflächen, vorzugsweise von Metallen, Metalloxiden oder Glas, oder organischen Polymeren.

Somit ist ebenfalls Gegenstand der vorliegenden Erfindung die Verwendung einer erfindungsgemäßen Zusammensetzung bzw. erfindungsgemäß erhaltenen bzw. hergestellten Zusammensetzung als Haftvermittler zwischen anorganischen und organischen Oberflächen, bei der Verstärkung organischer Polymere mit anorganischen Füllstoffen, bei der Beschichtung anorganischer Oberflächen oder organischen Polymeren sowie in faserverstärkten Polymeren als Haftvermittler zwischen anorganischen Fasern und organischen Polymeren.

Die vorliegende Erfindung wird anhand der nachfolgenden Beispiele näher erläutert, ohne den Gegenstand zu beschränken.

## Beispiele:

### Analysenmethoden:

Die Bestimmung von hydrolysierbarem Chlorid: 5 g Probe werden in einem 150 ml Becherglas mit 20 ml Ethanol und 80 ml Essigsäure gelöst. Der Chloridgehalt wird durch potentiographische Titration mit Silbernitratlösung [c ($AgNO_3$) = 0,01 mol / l] bestimmt. Ein Reagenzzuschnitt wird in gleicher Weise bestimmt.

Berechnung:

$$\text{Chlorid [mg / kg]} = (A - B) \times 355/ E$$

A = Verbrauch für die Probe in ml
B = Verbrauch für den Rohling in ml
E = Probenmenge in g

$^{13}$C-NMR- und $^{1}$H-NMR- Bestimmung erfolgte mittels "400MHz Bruker NMR", $CDCl_3$ wurde als Lösemittel verwendet.

Die Bestimmung der Farbzahlen erfolgte nach DIN EN ISO 6271 (Teil 2, spektrometrische Messung, APHA-Farbzahl, nachfolgend auch kurz ISO 6271 genannt) sowie nach DIN EN ISO 4630 (2015, spektrometrische Messung, Gardner-Farbzahl, nachfolgend auch kurz ISO 4630 genannt).

Die Brechzahlen wurden gemäß DIN 51423 und die Dichten nach DIN 51757 bestimmt.

**Vergleichsbeispiel 1**:

Apparatur: 250ml Vierhalskolben mit KPG-Rührer, Tropftrichter, Intensivkühler, Sumpfthermometer, Ölbad mit Temperaturregelung.

36,99 g Dynasylan® DAMO [N-(2-Aminoethyl)-3-aminopropyltrimethoxysilan] und 24,58 g Methanol wurden unter Rühren vorgelegt. Bei einer Sumpftemperatur von 50°C wurden 21,66 g Vinylbenylchlorid -wie im Markt erhältlich- (Fa. YANCHENG XINGCHEN CHEMICAL Co., 4-Chlormethylstyrol zuvor und nachfolgend auch kurz Vinylbenzylchlorid genannt) innerhalb von 51 Min. zugetropft. Nach Zugabe von ca. 2 ml. Vinylbenzylchlorid kommt es zu einer starken Gelbfärbung im Sumpf. Die maximale Sumpftemperatur während der Zugabe von Vinylbenzylchlorid betrug 55°C. Nach Ende der Vinylbenzylchlorid Zugabe wurde bei 50°C-55°C noch 2h nachgerührt. Anschließend wurde das Reaktionsgemisch mit 56,70 g Methanol verdünnt. Erhalten wurde ein klares orange verfärbtes Produkt (139,93 g).

Analysenergebnisse bezüglich des Produkts aus dem Vergleichsversuch 1:

| Bestimmung | Ergebnis | Methode |
|---|---|---|
| Hydrolysierbares Chlorid [w/w %] | 3,7 | wie oben beschrieben |
| Gardner-Farbzahl | 9 | ISO 4630 |
| APHA-Farbzahl [mg Pt-Co/l] | *) | ISO 6271 |
| Brechzahl | 1,3993 | DIN 51423 |
| Dichte (20°C) [g/cm$^3$] | 0,910 | DIN 51757 |
| [*) einem Wert von 1 nach Gardner/ISO 4630 entspricht etwa einem Wert von 120 mg Pt-Co/l nach APHA/ISO 6271] | | |

**Beispiel 1:**

Zunächst wurde die Eduktkomponente Vinylbenzylchlorid (VBC) der Fa. YANCHENG XINGCHEN CHEMICAL Co.,Ltd.) vorbehandelt:
Apparatur: 500ml Vierhalskolben mit KPG-Rührer, Kolonnenrohr (l=25cm, NS 29/32), eine Carbon Sulzer Packung (l=50mm, d=28mm), Sumpf- und Kopfthermometer, Rücklaufteiler, Öldrehschieberpumpe, Manometer, Kühlfalle, Ölbad mit Temperaturregelung.

410,288g Vinylbenzylchlorid (gelb) wurden mit 0,361 g Nitromethan gemischt und im 500 ml Vierhalskolben vorgelegt. Innerhalb von 3,25 h wurde bei einer Sumpftemperatur von ca. 80°C und einem Absolutdruck von ca. 0,1 mbar 188,9 g ein klares farbloses Destillat abgenommen (Fraktion 1). Dieses wurde zusätzlich mit 0,191 g TBC (4-tert.-Butylpyrocatechol) stabilisiert. Nach weiteren zwei Stunden Destillation wurden zusätzlich 197,25 g klares und farbloses Destillat abgenommen. Nach Destillation wurden 8,3 g brauner, leicht viskoser Destillationsrückstand im Sumpf isoliert.

Tabelle 2: Analysenergebnisse bezüglich Vinylbenzylchlorid:

| | Gardner-Farbzahl ISO 4630 | APHA-Farbzahl [mg Pt-Co/l] ISO 6271 |
|---|---|---|
| Vinylbenzylchlorid unbehandelt | 3 | *) |
| Vinylbenzylchlorid / Fraktion 1 | - | <5 |
| Vinylbenzylchlorid / Fraktion 2 | - | <5 |
| [*) einem Wert von 1 nach Gardner entspricht etwa einem Wert von 120 mg Pt-Co/l nach APHA/ISO 6271] | | |

Anschließend erfolgte die Synthese einer methanolischen, 3-(N-benzyl-2-aminoethyl)-aminopropyltrimethoxysilanhydrochlorid enthaltenden Lösung.

Apparatur: 1000ml Vierhalskolben mit KPG-Rührer, Tropftrichter, Intensivkühler, Sumpfthermometer, Ölbad mit Temperaturregelung.

148,52 g Dynasylan® DAMO (N-(2-Aminoethyl)-3-aminopropyltrimethoxysilan) und 97,94 g Methanol wurden unter Rühren vorgelegt. Bei einer Sumpftemperatur von 55°C wurden 86,74 g Vinylbenylchlorid innerhalb von 48 Minuten zugetropft. Nach Zugabe von ca. 2 ml. Vinylbenzylchlorid ist der Sumpf noch klar und farblos. Die maximale Sumpftemperatur während der Zugabe von Vinylbenzylchlorid betrug 59°C. Nach Ende der Vinylbenzylchlorid Zugabe wurde bei 50-55°C noch 2h nachgerührt. Anschließend wurde das Reaktionsgemisch mit 227,08 g Methanol verdünnt. Erhalten wurden 556,28 g klares praktisch farbloses Produkt [Wirkstoff in Methanol], vgl. Tabelle 3.

Tabelle 3: Analysenergebnisse bezüglich der Zusammensetzung aus Beispiel 1

| Bestimmung | Ergebnis | Bestimmungsmethode |
|---|---|---|
| Hydrolysierbares Chlorid [w/w %] | 3,7 | wie oben beschrieben |
| APHA-Farbzahl [mg Pt-Co/l] | 115 | ISO 6271 |
| Brechzahl | 1,4054 | DIN 51423 |
| Dichte (20°C) [g/cm$^3$] | 0,912 | DIN 51757 |
| [*) einem Wert von 1 nach Gardner entspricht etwa einem Wert von 120 mg Pt-Co/l nach APHA/ISO 6271] | | |

Beispiel 2:

47,5 g der Methanol enthaltenden Zusammensetzung aus Beispiel 1 wurden 2,5 g DAMO zugesetzt, vgl. Tabelle 4.

Tabelle 4: Analysenergebnisse aus Beispiel 2 und Vergleichsbeispiel 1:

| Bestimmungsmethode | | Einheit | Vergleichsbeispiel 1 | Beispiel 2 |
|---|---|---|---|---|
| Hydrolysierbares. Chlorid | | Gew.-% | 3,7 | 3,5 |
| Dichte (20°C) | | g/cm³ | 0,910 | 0,918 |
| Farbzahl | | Gardner-Zahl (APHA-Farbzahl) | 9 | <1 (115 mg Pt-Co/l) |
| Brechzahl (20°C) | | | 1,3993 | 1,4071 |
| NMR-Auswertung | Verbindung(en) gemäß | | | |
| | Formel I | mol% | 45,4 | 48,5 |
| | Formel II | mol% | 14,9 | 13,3 |
| | Formel III | mol% | 12,4 | 12,2 |
| | Formel V | mol% | 6,2 | 5,0 |
| | Formel IV und Formel VI | mol% | 21,1 | 21,1 |

**Patentansprüche**

1. Verfahren zur Herstellung einer farblosen, mindestens 3-(N-Vinylbenzyl-2-aminoethyl)aminopropyltrimethoxysilan-hydrochlorid und Methanol enthaltenden Lösung, wobei die Lösung eine APHA-Farbzahl von ≤ 200 mg Pt-Co/l aufweist,
indem man

   - in Schritt 1 die Eduktkomponente Vinylbenzylchlorid unter Zusatz mindestens eines Stabilisators fraktioniert destilliert und
   - in Schritt 2 N-(2-Aminoethyl)-3-aminopropyltrimethoxysilan und Methanol vorlegt und unter Durchmischung das Destillat (Vinylbenzylchlorid) aus Schritt 1 in einem molaren Verhältnis des N-(2-Aminoethyl)-3-aminopropyltrimethoxysilans zu Vinylbenzylchlorid von 1,0 zu 0,60 bis 1,0 zu 1,15 bei einer Temperatur im Bereich von 40 bis 60°C zudosiert und nachreagieren lässt.

2. Verfahren nach Anspruch 1, **dadurch gekennzeichnet, dass** man in Schritt 1 mindestens einen Stabilisator aus der Reihe Nitromethan, 4-tert.-Butyl-pyrocatechol und/oder 2,4-Dinitrophenol einsetzt.

3. Verfahren nach Anspruch 1 oder 2, **dadurch gekennzeichnet, dass** man in Schritt 2 ein Vinylbenzylchlorid mit APHA-Farbzahl ≤ 5 mg Pt-Co/l einsetzt.

4. Verfahren nach einem der Ansprüche 1 bis 3, **dadurch gekennzeichnet, dass** man in Schritt 2 N-(2-Aminoethyl)-3-aminopropyltrimethoxysilans zu Vinylbenzylchlorid in einem molaren Verhältnis von 1,0 zu 0,8 bis 1,0 zu 1,05, vorzugsweise von 1,0 zu 0,99 bis 1,0 zu 1,01, dosiert.

5. Verfahren nach einem der Ansprüche 1 bis 4, **dadurch gekennzeichnet, dass** man in Schritt 2 N-(2-Aminoethyl)-3-aminopropyltrimethoxysilan und Methanol in einem Gewichtsverhältnis von 80 zu 20 bis 30 zu 70 vorlegt.

6. Verfahren nach Anspruch 5, **dadurch gekennzeichnet, dass** man in Schritt 2 N-(2-Aminoethyl)-3-aminopropyltrimethoxysilan und Methanol in einem Gewichtsverhältnis von 70 zu 30 bis 40 zu 60 vorlegt.

7. Verfahren nach Anspruch 5 oder 6, **dadurch gekennzeichnet, dass** man in Schritt 2 N-(2-Aminoethyl)-3-aminopropyltrimethoxysilan und Methanol in einem Gewichtsverhältnis von 60 zu 40 bis 50 zu 50 vorlegt.

8. Verfahren nach einem der Ansprüche 1 bis 7, **dadurch gekennzeichnet, dass** man das nach der Umsetzung in Schritt 2 vorliegende Produktgemisch bei einer Temperatur im Bereich von 40 bis 60°C noch über eine Zeit von 30 Minuten bis 3 Stunden unter Durchmischung nachreagieren lässt.

9. Verfahren nach einem der Ansprüche 1 bis 8, **dadurch gekennzeichnet, dass** man die in Schritt 2 erhaltene Zusammensetzung unter Zusatz von Methanol verdünnt.

10. Verfahren nach einem der Ansprüche 1 bis 9, **dadurch gekennzeichnet, dass** man der in Schritt 2 erhaltenen Zusammensetzung eine definierte Menge an N-(2-Aminoethyl)-3-aminopropyltrimethoxysilan zusetzt, vorzugsweise in einer Menge von 0 bis 50 Gew.-%, bezogen auf die Zusammensetzung.

11. Verfahren nach einem der Ansprüche 1 bis 10, **dadurch gekennzeichnet, dass** man die im Anschluss an Schritt 2 vorliegende Zusammensetzung unter Zusatz von Methanol auf einen Gehalt an Wirkstoff in Summe von 20 bis 80 Gew.-%, bezogen auf die Zusammensetzung, einstellt.

12. Verfahren nach Anspruch 11, **dadurch gekennzeichnet, dass** man die im Anschluss an Schritt 2 vorliegende Zusammensetzung unter Zusatz von Methanol auf einen Gehalt an Wirkstoff von 30 bis 70 Gew.-%, bezogen auf die Zusammensetzung, einstellt.

13. Zusammensetzung erhältlich nach einem der Ansprüche 1 bis 12.

14. Zusammensetzung nach mindestens einem der Ansprüche 1 bis 13 umfassend mindestens zwei Verbindungen aus der Reihe gemäß den Formeln I bis VI,

$(H_3CO)_3Si\text{-}(CH_2)_3NH(CH_2)_2NH_2 \text{ x } (HCl)_y$ Formel I

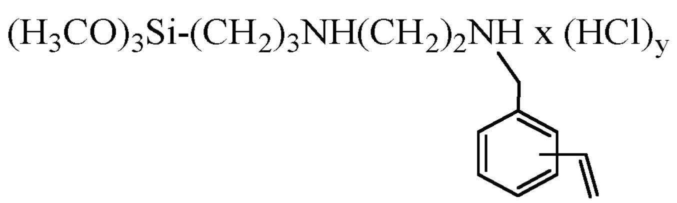

Formel II

,

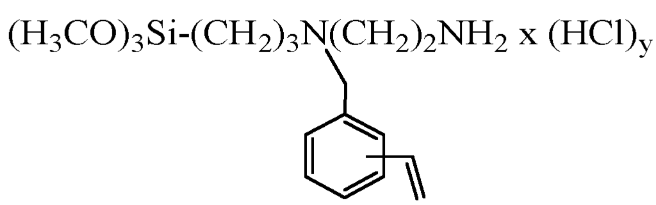

Formel III

,

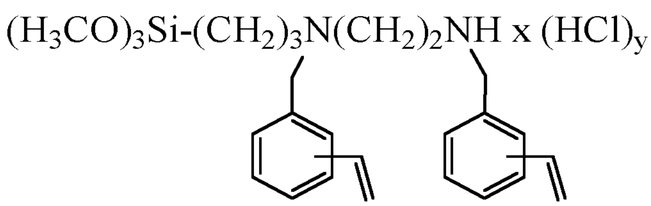

Formel IV

,

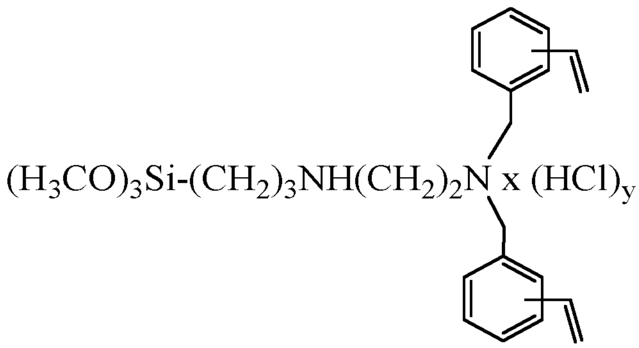

Formel V

und

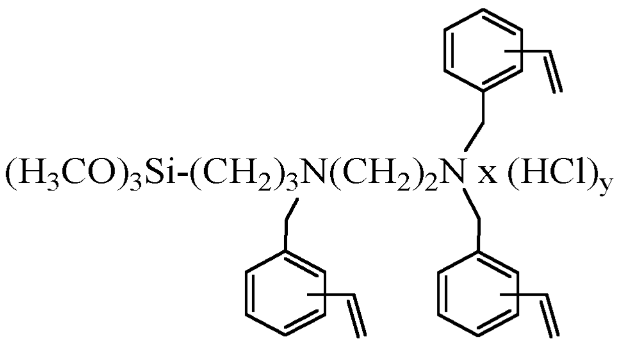

Formel VI

,

wobei y jeweils für 0, 1 oder 2 stehen kann,
und Methanol, wobei die Zusammensetzung bzw. Lösung einen Gehalt an Wirkstoff von 20 bis 80 Gew.-%, bezogen auf die gesamte Zusammensetzung, und eine APHA-Farbzahl von ≤ 200 mg Pt-Co/l aufweist.

**15.** Verwendung einer Zusammensetzung nach mindestens einem der Ansprüche 1 bis 14 als Haftvermittler zwischen anorganischen und organischen Oberflächen, bei der Verstärkung organischer Polymere mit anorganischen Füllstoffen, bei der Beschichtung anorganischer Oberflächen oder organischen Polymeren sowie in faserverstärkten Polymeren als Haftvermittler zwischen anorganischen Fasern und organischen Polymeren.

## Claims

**1.** Process for preparing a colourless solution comprising at least 3-(N-vinylbenzyl-2-aminoethyl)aminopropyltrimethoxysilane hydrochloride and methanol, where the solution has an APHA colour number of ≤ 200 mg Pt-Co/l,

by

- in step 1 fractionally distilling the vinylbenzyl chloride reactant component with addition of at least one stabilizer and
- in step 2 metering and mixing the distillate (vinylbenzyl chloride) from step 1 into an initial charge of N-(2-aminoethyl)-3-aminopropyltrimethoxysilane and methanol in a molar ratio of the N-(2-aminoethyl)-3-aminopropyltrimethoxysilane to vinylbenzyl chloride of 1.0:0.60 to 1.0:1.15 at a temperature in the range from 40 to 60°C and leaving them to react further.

2. Process according to Claim 1, **characterized in that** at least one stabilizer from the group of nitromethane, 4-tert-butylpyrocatechol and/or 2,4-dinitrophenol is used in step 1.

3. Process according to Claim 1 or 2, **characterized in that** a vinylbenzyl chloride with APHA colour number < 5 mg Pt-Co/l is used in step 2.

4. Process according to any of Claims 1 to 3, **characterized in that** N-(2-aminoethyl)-3-aminopropyltrimethoxysilane is metered into vinylbenzyl chloride in step 2 in a molar ratio of 1.0:0.8 to 1.0:1.05, preferably of 1.0:0.99 to 1.0:1.01.

5. Process according to any of Claims 1 to 4, **characterized in that** N-(2-aminoethyl)-3-aminopropyltrimethoxysilane and methanol are included in the initial charge in step 2 in a weight ratio of 80:20 to 30:70.

6. Process according to Claim 5, **characterized in that** N-(2-aminoethyl)-3-aminopropyltrimethoxysilane and methanol are included in the initial charge in step 2 in a weight ratio of 70:30 to 40:60.

7. Process according to Claim 5 or 6, **characterized in that** N-(2-aminoethyl)-3-aminopropyltrimethoxysilane and methanol are included in the initial charge in step 2 in a weight ratio of 60:40 to 50:50.

8. Process according to any of Claims 1 to 7, **characterized in that** the product mixture present after the reaction in step 2 is left to react further at a temperature in the range from 40 to 60°C for a further period of 30 minutes to 3 hours while mixing.

9. Process according to any of Claims 1 to 8, **characterized in that** the composition obtained in step 2 is diluted with addition of methanol.

10. Process according to any of Claims 1 to 9, **characterized in that** a defined amount of N-(2-aminoethyl)-3-aminopropyltrimethoxysilane, preferably in an amount of 0 to 50% by weight, based on the composition, is added to the composition obtained in step 2.

11. Process according to any of Claims 1 to 10, **characterized in that** the composition present after step 2 is adjusted to a total active ingredient content of 20% to 80% by weight, based on the composition, with addition of methanol.

12. Process according to Claim 11, **characterized in that** the composition present after step 2 is adjusted to an active ingredient content of 30% to 70% by weight, based on the composition, with addition of methanol.

13. Composition obtainable according to any of Claims 1 to 12.

14. Composition according to at least one of Claims 1 to 13, comprising at least two compounds from the group of the formulae I to VI,

$$(H_3CO)_3Si\text{-}(CH_2)_3NH(CH_2)_2NH_2 \times (HCl)_y \qquad \text{Formula I}$$

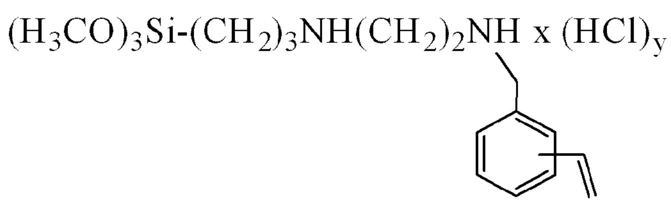

Formula II

,

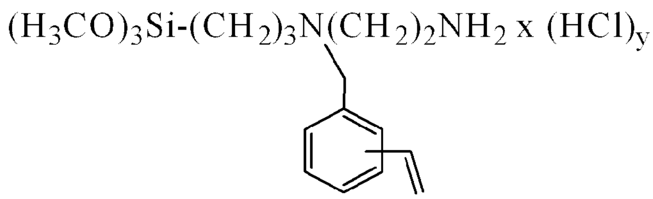

Formula III

,

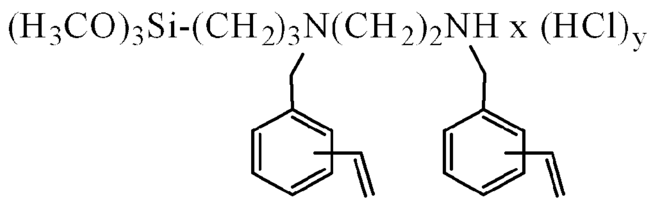

Formula IV

,

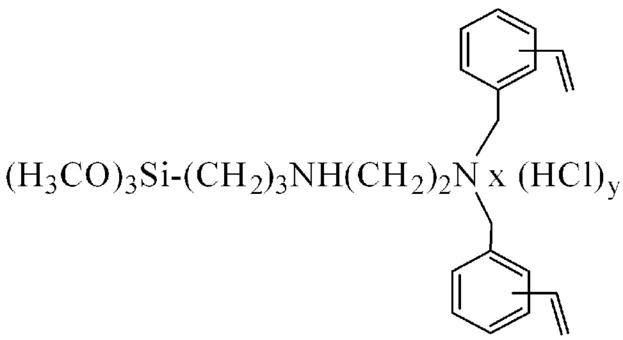

Formula V

and

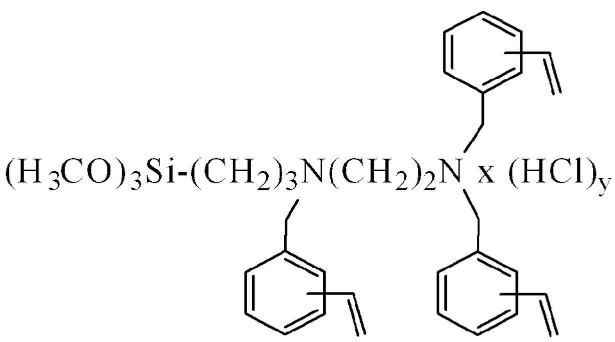

Formula VI

,

where y in each case may be 0, 1 or 2,

and methanol, where the composition or solution has an active ingredient content of 20% to 80% by weight, based on the overall composition, and an APHA colour number of ≤ 200 mg Pt-Co/l.

**15.** Use of a composition according to at least one of Claims 1 to 14 as adhesion promoter between inorganic and organic surfaces, in the reinforcement of organic polymers with inorganic fillers, in the coating of inorganic surfaces or organic polymers and in fibre-reinforced polymers as adhesion promoter between inorganic fibres and organic polymers.

## Revendications

**1.** Procédé de fabrication d'une solution incolore, contenant au moins du chlorhydrate de 3-(N-vinylbenzyl-2-aminoéthyl)aminopropyltriméthoxysilane et du méthanol, la solution présentant un indice de couleur APHA ≤ 200 mg de Pt-Co/l, selon lequel

- à l'étape 1, le composant réactif chlorure de vinylbenzyle est soumis à une distillation fractionnée avec ajout d'au moins un stabilisateur, et
- à l'étape 2, du N-(2-aminoéthyl)-3-aminopropyltriméthoxysilane et du méthanol sont chargés initialement et, avec mélange, le distillat (chlorure de vinylbenzyle) de l'étape 1 est ajouté en un rapport molaire entre le N-(2-aminoéthyl)-3-aminopropyltriméthoxysilane et le chlorure de vinylbenzyle de 1,0 sur 0,60 à 1,0 sur 1,15 à une température dans la plage allant de 40 à 60 °C, et laissé réagir.

**2.** Procédé selon la revendication 1, **caractérisé en ce qu'**au moins un stabilisateur de la série constituée par le nitrométhane, le 4-tert.-butyl-pyrocatéchol et/ou le 2,4-dinitrophénol est utilisé à l'étape 1.

**3.** Procédé selon la revendication 1 ou 2, **caractérisé en ce qu'**un chlorure de vinylbenzyle ayant un indice de couleur APHA ≤ 5 mg de Pt-Co/l est utilisé à l'étape 2.

**4.** Procédé selon l'une quelconque des revendications 1 à 3, **caractérisé en ce qu'**à l'étape 2, le N-(2-aminoéthyl)-3-aminopropyltriméthoxysilane est ajouté au chlorure de vinylbenzyle en un rapport molaire de 1,0 sur 0,8 à 1,0 sur 1,05, de préférence de 1,0 sur 0,99 à 1,0 sur 1,01.

**5.** Procédé selon l'une quelconque des revendications 1 à 4, **caractérisé en ce qu'**à l'étape 2, le N-(2-aminoéthyl)-3-aminopropyltriméthoxysilane et le méthanol sont chargés initialement en un rapport en poids de 80 sur 20 à 30 sur 70.

**6.** Procédé selon la revendication 5, **caractérisé en ce qu'**à l'étape 2, le N-(2-aminoéthyl)-3-aminopropyltriméthoxysilane et le méthanol sont chargés initialement en un rapport en poids de 70 sur 30 à 40 sur 60.

**7.** Procédé selon la revendication 5 ou 6, **caractérisé en ce qu'**à l'étape 2, le N-(2-aminoéthyl)-3-aminopropyltriméthoxysilane et le méthanol sont chargés initialement en un rapport en poids de 60 sur 40 à 50 sur 50.

**8.** Procédé selon l'une quelconque des revendications 1 à 7, **caractérisé en ce que** le mélange de produits présent après la réaction à l'étape 2 est encore laissé réagir à une température dans la plage allant de 40 à 60 °C pendant une durée de 30 minutes à 3 heures avec mélange.

**9.** Procédé selon l'une quelconque des revendications 1 à 8, **caractérisé en ce que** la composition obtenue à l'étape 2 est diluée avec ajout de méthanol.

**10.** Procédé selon l'une quelconque des revendications 1 à 9, **caractérisé en ce qu'**une quantité définie de N-(2-aminoéthyl)-3-aminopropyltriméthoxysilane est ajoutée à la composition obtenue à l'étape 2, de préférence en une quantité de 0 à 50 % en poids, par rapport à la composition.

**11.** Procédé selon l'une quelconque des revendications 1 à 10, **caractérisé en ce que** la composition présente à la suite de l'étape 2 est ajustée par ajout de méthanol à une teneur en agent actif totale de 20 à 80 % en poids, par rapport à la composition.

**12.** Procédé selon la revendication 11, **caractérisé en ce que** la composition présente à la suite de l'étape 2 est ajustée par ajout de méthanol à une teneur en agent actif de 30 à 70 % en poids, par rapport à la composition.

**13.** Composition, pouvant être obtenue selon l'une quelconque des revendications 1 à 12.

**14.** Composition selon au moins l'une quelconque des revendications 1 à 13, comprenant au moins deux composés de la série selon les formules I à VI :

$(H_3CO)_3Si\text{-}(CH_2)_3NH(CH_2)_2NH_2 \text{ x } (HCl)_y$ Formule I

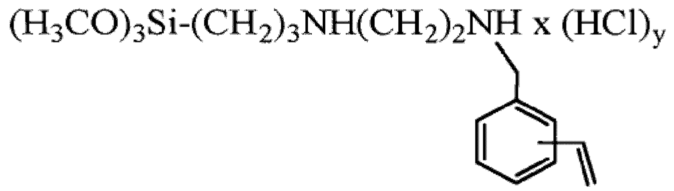

Formule II

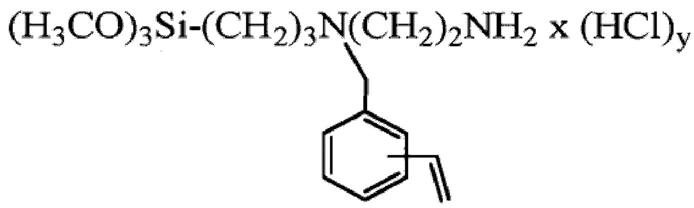

Formule III

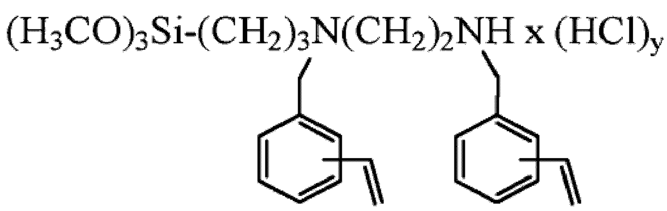

Formule IV

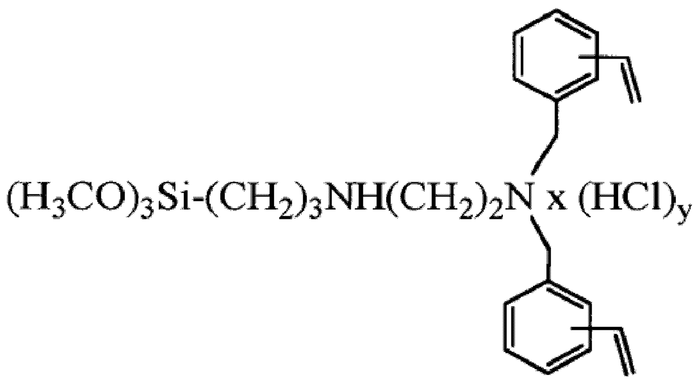

Formule V

et

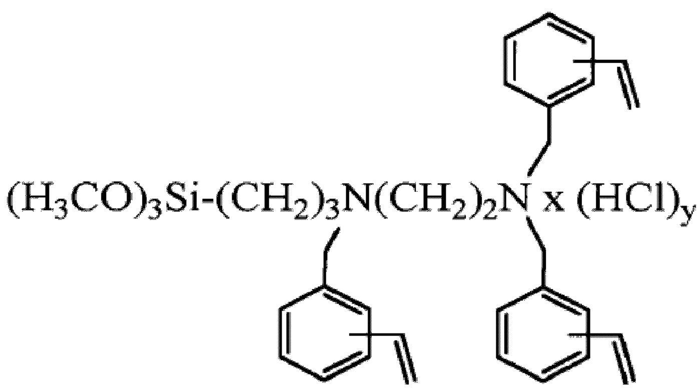

Formule VI

dans lesquelles y peut à chaque fois représenter 0, 1 ou 2,
et du méthanol, la composition ou la solution présentant une teneur en agent actif de 20 à 80 % en poids, par rapport à la composition totale, et un indice de couleur APHA $\leq$ 200 mg de Pt-Co/l.

**15.** Utilisation d'une composition selon au moins l'une quelconque des revendications 1 à 14 en tant que promoteur d'adhésion entre des surfaces inorganiques et organiques, lors du renforcement de polymères organiques avec des charges inorganiques, lors du revêtement de surfaces inorganiques ou de polymères organiques, et dans des polymères renforcés par des fibres en tant que promoteur d'adhésion entre des fibres inorganiques et des polymères organiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4902556 A
- EP 353766 A
- US 4849294 A
- EP 338128 A
- US 4499152 A
- US 4382991 A
- US 4330444 A
- DE 2802242
- JP 1259369 A
- EP 176062 A
- EP 590270 A
- WO 2005118599 A